# EUROPEAN PATENT APPLICATION

(11) **EP 4 772 407 A1**
(43) Date of publication of application: **08.07.2026**
(21) Application number: 24857915.3
(22) Date of filing: 04.06.2024
(51) Int. Cl.: B60R 21/207

(54) **SIDE AIRBAG AND SEAT**

(30) Priority: 31.08.2023 CN 202322364102 U
(71) Applicant: Autoliv Development AB, 44783 Vargarda (SE)
(72) Inventor: DONG, Yihan, Shanghai 201807 (CN); WANG, Kan, Shanghai 201807 (CN); OUYANG, Jianxiong, Shanghai 201807 (CN)
(74) Representative: Mewburn Ellis LLP
(86) International application number: PCT/CN2024/097218
(87) International publication number: WO 2025/044370

(57) **Abstract**

Disclosed is a side airbag, located between adjacent seats after being deployed. The side airbag includes a first air chamber (1), a second air chamber (2), and a third air chamber (3). The first air chamber (1) is located between the second air chamber (2) and the third air chamber (3). The second air chamber (2) is deployed toward one of the adjacent seats. The third air chamber (3) is deployed toward the other of the adjacent seats. The first air chamber (1) includes a primary air chamber (11) and a secondary air chamber (12). The primary air chamber (11) is deployed toward a front of a seat. The secondary air chamber (12) is deployed toward a rear of the seat. Further disclosed is a seat. The first air chamber (1) is provided as the primary air chamber (11) extending forward and the secondary air chamber (12) extending rearward, thereby increasing the coverage of the first air chamber (1). Whether the seat is adjusted forward or rearward along a slide rail, an occupant can be protected.

## Description

### TECHNICAL FIELD

The present invention relates to the technical field of safety airbags, and in particular to a side airbag and a seat.

### BACKGROUND ART

Existing vehicles are provided with a safety airbag between two adjacent seats for cushioning a collision between adjacent occupants. However, the contact area between the existing safety airbag and a center armrest is too small, making the safety airbag unstable during deployment. In addition, when a slide rail of the seat is a long rail, the head of the occupant may be misaligned with the safety airbag and may not be protected as the seat is adjusted forward or rearward.

Therefore, it is necessary to design a side airbag applicable to a seat having a long slide rail and a seat.

### SUMMARY OF THE INVENTION

The present invention aims to overcome the deficiencies of the prior art and provide a side airbag applicable to a seat having a long slide rail and a seat.

A technical solution of the present invention provides a side airbag. The side airbag is located between adjacent seats after being deployed. The side airbag comprises a first air chamber, a second air chamber, and a third air chamber. The first air chamber is located between the second air chamber and the third air chamber. The second air chamber is deployed toward one of the adjacent seats. The third air chamber is deployed toward the other of the adjacent seats. The first air chamber comprises a primary air chamber and a secondary air chamber. The primary air chamber is deployed toward a front of a seat. The secondary air chamber is deployed toward an upper rear of the seat.

Further, the primary air chamber is in communication with the second air chamber through a first air hole, and the primary air chamber is in communication with the third air chamber through a second air hole.

Further, the primary air chamber is directly connected to an inflator.

Further, the primary air chamber corresponds to at least the torso of an occupant after being deployed, and the secondary air chamber corresponds to the head of the occupant in height after being deployed.

Further, a first non-inflatable region is provided in the primary air chamber.

Further, a second non-inflatable region is provided in the secondary air chamber.

Further, the second air chamber corresponds to at least the shoulders and arms of an occupant after being deployed.

Further, the third air chamber is in contact with the seat or an adjacent occupant after being deployed.

Further, a volume of the first air chamber is greater than a volume of the second air chamber and a volume of the third air chamber.

The present invention further provides a seat, comprising the side airbag according to any of the above. The side airbag is folded in a foam layer of the seat before inflation. A slide rail is provided at a bottom portion of the seat. When the seat slides to a frontmost end of the slide rail, an occupant on the seat corresponds to the primary air chamber. When the seat slides to a rearmost end of the slide rail, the occupant on the seat corresponds to the secondary air chamber.

The above technical solution can achieve the following beneficial effects:

In the present invention, the first air chamber is provided as the primary air chamber extending forward and the secondary air chamber extending rearward, thereby increasing the coverage of the first air chamber. Whether the seat is adjusted forward or rearward along the slide rail, the occupant can be protected.

### BRIEF DESCRIPTION OF THE DRAWINGS

The disclosure of the present invention will become better understood with reference to the accompanying drawings. It should be understood that these accompanying drawings are for illustrative purposes only and are not intended to limit the scope of protection of the present invention. In the drawings:
FIG. 1 is a schematic view of a side airbag deployed according to an embodiment of the present invention;
FIG. 2 is a side view of the side airbag deployed according to an embodiment of the present invention; and
FIG. 3 is a schematic view of a seat sliding rearward according to an embodiment of the present invention.

### Reference Numerals:

first air chamber 1: primary air chamber 11, secondary air chamber 12, first non-inflatable region 13, second non-inflatable region 14
second air chamber 2: first air hole 21;
third air chamber 3: second air hole 31.

### DETAILED DESCRIPTION OF PREFERRED EMBODIMENTS

Specific implementations of the present invention are described further below with reference to the accompanying drawings.

It may be easily understood that those of ordinary skills in the art may propose a plurality of interchangeable structural modes and implementation methods according to the technical solutions of the present invention without changing the essential spirit of the present invention. Therefore, the following specific implementations and the accompanying drawings are merely exemplary descriptions of the technical solutions of the present invention, and should not be regarded as the whole of the present invention or regarded as limitations to the technical solutions of the present invention.

Positional terms such as up, down, left, right, before, behind, front, back, top, bottom, etc., which are referred to or possibly referred to in this specification are defined with respect to the configurations shown in the drawings, and the same are relative concepts; therefore, the positional terms may possibly change correspondingly according to different positions thereof and different use states. Therefore, these or other positional terms should not be construed as restrictive terms.

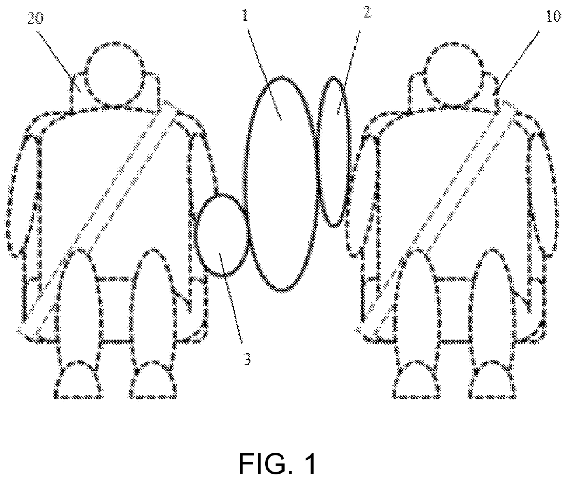

In some embodiments of the present invention, as shown in FIG. 1 to FIG. 3, a side airbag is provided. The side airbag is located between adjacent seats after being deployed. The side airbag includes a first air chamber 1, a second air chamber 2, and a third air chamber 3. The first air chamber 1 is located between the second air chamber 2 and the third air chamber 3. The second air chamber 2 is deployed toward one of the adjacent seats. The third air chamber 3 is deployed toward the other of the adjacent seats. The first air chamber 1 includes a primary air chamber 11 and a secondary air chamber 12. The primary air chamber 11 is deployed toward a front of a seat. The secondary air chamber 12 is deployed toward an upper rear of the seat.

Specifically, as shown in FIG. 1, a front row of a vehicle includes a driver seat 10 and a passenger seat 20, and the side airbag is located between the driver seat 10 and the passenger seat 20 after being deployed. The second air chamber 2 is deployed toward the driver seat 10. The second air chamber 2 is configured to protect an occupant on the driver seat 10. The third air chamber 3 is deployed toward the passenger seat 20. The third air chamber 3 is in contact with the passenger seat 20 or an occupant on the passenger seat 20 after being deployed, and functions to support the first air chamber 1 and the second air chamber 2, thereby improving the stability of the side airbag after being deployed.

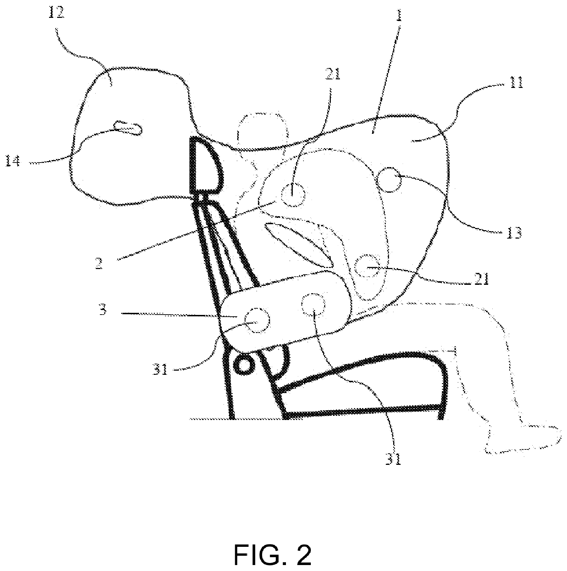

As shown in FIG. 2, the first air chamber 1 includes a primary air chamber 11 and a secondary air chamber 12. The primary air chamber 11 and the secondary air chamber 12 are integrally formed. The primary air chamber 11 is deployed toward a front of the seat. When the seat is used normally, the primary air chamber 11 protects the occupant.

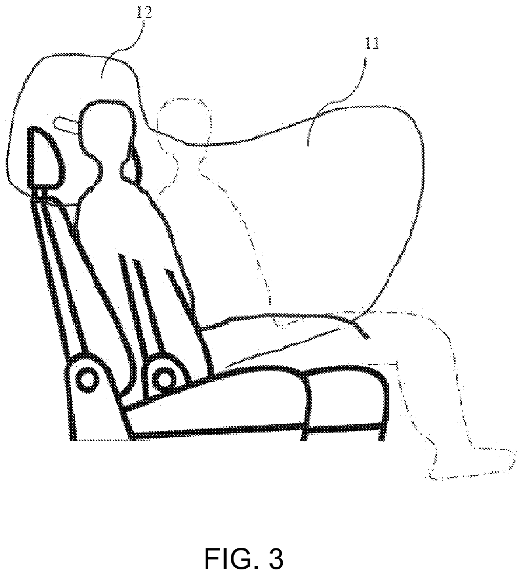

As shown in FIG. 3, the secondary air chamber 12 is deployed toward a rear of the seat. When the seat slides rearward, the occupant is misaligned with the primary air chamber 11 and corresponds to the secondary air chamber 12, so that the secondary air chamber 12 protects the occupant.

In this embodiment, the first air chamber 1 is provided as the primary air chamber 11 extending forward and the secondary air chamber 12 extending rearward, thereby increasing the coverage of the first air chamber 1. Whether the seat is adjusted forward or rearward along a slide rail, the occupant can be protected.

Further, as shown in FIG. 2, the primary air chamber 11 is in communication with the second air chamber 2 through first air holes 21, and the primary air chamber 11 is in communication with the third air chamber 3 through second air holes 31.

In this embodiment, there are two first air holes 21, which place the primary air chamber 11 in communication with the second air chamber 2. There are also two second air holes 31, which place the primary air chamber 11 in communication with the third air chamber 3.

Optionally, the number of the first air holes 21 and the second air holes 31 may also be one or more than two.

Further, the primary air chamber 11 is directly connected to an inflator. During inflation, the first air chamber 1 is first deployed, and then the second air chamber 2 and the third air chamber 3 are deployed simultaneously.

Optionally, the inflator may also be directly connected to the second air chamber 2 or the third air chamber.

Further, as shown in FIG. 2 to FIG. 3, the primary air chamber 11 corresponds to at least the torso of the occupant after being deployed, and the secondary air chamber 12 corresponds to the head of the occupant in height after being deployed.

In this embodiment, the primary air chamber 11 is deployed toward the front of the seat, corresponds to a part of the head, the upper body, and a part of the legs of the occupant, and functions to protect the torso of the occupant.

Preferably, the primary air chamber 11 may also correspond to the whole head and thighs of the occupant.

As shown in FIG. 2, when the seat slides forward, the secondary air chamber 12 is located at the rear of the head of the occupant.

As shown in FIG. 3, when the seat slides rearward, the secondary air chamber 12 corresponds to the head of the occupant and can protect the head of the occupant.

Preferably, the secondary air chamber 12 may also correspond to the head and torso of the occupant after being deployed, so as to better protect the occupant.

Further, as shown in FIG. 2, a first non-inflatable region 13 is provided in the primary air chamber 11, and the first non-inflatable region 13 is configured to control a thickness of the primary air chamber 11 to ensure the stability of the total volume.

Further, as shown in FIG. 2, a second non-inflatable region 14 is provided in the secondary air chamber 12, and the second non-inflatable region 14 is configured to control a thickness of the secondary air chamber 12 to ensure the stability of the total volume.

Since the primary air chamber 11 and the secondary air chamber 12 have a large volume after being deployed, in order to improve the stability after deployment, the non-inflatable region is added to each of the primary air chamber 11 and the secondary air chamber 12. The non-inflatable region is a closed region sewn within the air chamber using sewing thread, and this region cannot be inflated.

Further, as shown in FIG. 1, the second air chamber 2 corresponds to at least the shoulders and arms of the occupant after being deployed, and the second air chamber 2 can protect the shoulders and arms of the occupant on the driver seat 10.

Optionally, the second air chamber 2 may also be in contact with a side surface of the driver seat 10 after being deployed, so as to support the first air chamber 1.

Further, as shown in FIG. 1, the third air chamber 3 is in contact with the seat after being deployed. The third air chamber 3 is located on a lower side of the first air chamber 1 and is in contact with a side surface of the passenger seat 20 after being deployed, so as to support the first air chamber 1 and the second air chamber 2.

Optionally, the third air chamber 3 may also be in contact with the occupant on the passenger seat 20, so as to function as a support and protect the occupant on the passenger seat 20.

In this embodiment, a volume of the first air chamber 1 is greater than a volume of the second air chamber 2 and a volume of the third air chamber 3.

In another embodiment of the present invention, as shown in FIG. 1 to FIG. 3, a seat includes the side airbag in any of the above embodiments. The side airbag is folded in a foam layer of the seat before inflation. A slide rail (not shown) is provided at a bottom portion of the seat. When the seat slides to a frontmost end of the slide rail, an occupant on the seat corresponds to the primary air chamber 11. When the seat slides to a rearmost end of the slide rail, the occupant on the seat corresponds to the secondary air chamber 12.

Specifically, as shown in FIG. 2, when the seat is used normally or slides to the frontmost end of the slide rail, the primary air chamber 11 corresponds to the occupant, so as to protect the occupant.

As shown in FIG. 3, when the seat slides rearward to the rearmost end of the slide rail, the occupant is misaligned with the primary air chamber 11, and the secondary air chamber 12 corresponds to the occupant, so as to protect the occupant.

This embodiment is applicable to a seat having a long slide rail and can protect the occupant regardless of how the seat slides.

The above description is merely illustrative of the principles and preferred embodiments of the present invention. It should be noted that other variations can be made by those of ordinary skill in the art on the basis of the principles of the present invention, and such variations should be construed as falling within the scope of protection of the present invention.

## Claims

1. A side airbag, wherein the side airbag is located between adjacent seats after being deployed, the side airbag comprises a first air chamber, a second air chamber, and a third air chamber, the first air chamber is located between the second air chamber and the third air chamber, the second air chamber is deployed toward one of the adjacent seats, and the third air chamber is deployed toward the other of the adjacent seats, **characterized in that** the first air chamber comprises a primary air chamber and a secondary air chamber, the primary air chamber is deployed toward a front of a seat, and the secondary air chamber is deployed toward a rear of the seat.

2. The side airbag according to claim 1, wherein the primary air chamber is in communication with the second air chamber through a first air hole, and the primary air chamber is in communication with the third air chamber through a second air hole.

3. The side airbag according to claim 1, wherein the primary air chamber is directly connected to an inflator.

4. The side airbag according to claim 1, wherein the primary air chamber corresponds to at least the torso of an occupant after being deployed, and the secondary air chamber corresponds to the head of the occupant in height after being deployed.

5. The side airbag according to claim 1, wherein a first non-inflatable region is provided in the primary air chamber.

6. The side airbag according to claim 1, wherein a second non-inflatable region is provided in the secondary air chamber.

7. The side airbag according to claim 1, wherein the second air chamber corresponds to at least the shoulders and arms of an occupant after being deployed.

8. The side airbag according to claim 1, wherein the third air chamber is in contact with the seat or an adjacent occupant after being deployed.

9. The side airbag according to claim 1, wherein a volume of the first air chamber is greater than a volume of the second air chamber and a volume of the third air chamber.

10. A seat, **characterized by** comprising the side airbag according to any one of claims 1 to 9, wherein the side airbag is folded in a foam layer of the seat before inflation, a slide rail is provided at a bottom portion of the seat, when the seat slides to a frontmost end of the slide rail, an occupant on the seat corresponds to the primary air chamber, and when the seat slides to a rearmost end of the slide rail, the occupant on the seat corresponds to the secondary air chamber.
